# EUROPÄISCHE PATENTSCHRIFT

(11) **EP 4 171 927 B1**
(45) Veröffentlichungstag und Bekanntmachung des Hinweises auf die Patenterteilung: **17.09.2025**
(21) Anmeldenummer: 21739976.5
(22) Anmeldetag: 23.06.2021
(51) Int. Cl.: B29C 64/25, B33Y 30/00

(54) **3D-DRUCKER FÜR DIE AUTOMATISIERTE SERIENFERTIGUNG**
3D PRINTER FOR AUTOMATED SERIES PRODUCTION
IMPRIMANTE 3D POUR PRODUCTION EN SÉRIE AUTOMATISÉE

(30) Priorität: 30.06.2020 DE 102020208174
(43) Veröffentlichungstag der Anmeldung: 03.05.2023
(73) Patentinhaber: Robert Bosch GmbH, 70442 Stuttgart (DE)
(72) Erfinder: BARGEN, Hans, 70825 Korntal-Muenchingen (DE); JAHNLE, Hendrik, 71397 Leutenbach (DE)
(86) Internationale Anmeldenummer: PCT/EP2021/067072
(87) Internationale Veröffentlichungsnummer: WO 2022/002705

(56) Entgegenhaltungen:
- EP-A1- 3 202 574
- WO-A1-2018/038749
- CN-A- 107 877 863

## Beschreibung

Die vorliegende Erfindung betrifft einen 3D-Drucker, der speziell auf eine vereinfachte Serienfertigung von Objekten ausgerichtet ist.

### Stand der Technik

Bei der additiven Fertigung von Objekten mittels 3D-Druck wird dem herzustellenden Objekt sukzessive Material hinzugefügt und am Objekt verfestigt. Hierzu kann beispielsweise flüssiges oder pastöses Material bei einer erhöhten Temperatur aus einem relativ zum herzustellenden Objekt bewegbaren Druckkopf auf das herzustellende Objekt aufgebracht werden und dort durch Abkühlung erstarren. Entsprechende Druckköpfe sind beispielsweise für metallische Ausgangsmaterialien aus der DE 10 2015 218 375 A1 bekannt.

Ferner ist aus der WO 2018/038749 A1 ein Fertigungssystem zur Herstellung von 3-dimensionalen Bauteilen bekannt, wobei das System einen Druckkopf und eine thermisch isolierte Baukammer aufweist.

EP 3 202 574 A1 offenbart ein Fertigungssystem zur Herstellung von 3-dimensionalen Bauteilen, wobei auch dieses System einen Druckkopf und eine thermisch isolierte Baukammer aufweist.

Bei diesen und anderen 3D-Druckern ist es häufig vorgesehen, das herzustellende Objekt während der Fertigung in einem temperierbaren Bauraum auf einer Grundtemperatur zu halten.

### Offenbarung der Erfindung

Im Rahmen der Erfindung wurde ein 3D-Drucker entwickelt. Dieser 3D-Drucker umfasst einen temperierbaren, thermisch isolierten Bauraum für ein herzustellendes Objekt sowie mindestens einen entlang mindestens zweier Achsen bewegbaren Druckkopf. Dieser Druckkopf vermag ein pulverförmiges, pastöses oder flüssiges Material lokal zu dem herzustellenden Objekt hinzuzufügen.

Das Material kann insbesondere durch Temperatureinwirkung mit dem herzustellenden Objekt verbunden werden. So kann sich beispielsweise ein Material, das im flüssigen heißen Zustand aus dem Druckkopf austritt, mit dem herzustellenden Objekt verbinden, wenn es abkühlt. Es kann aber auch beispielsweise ein pulverförmiges oder pastöses Material durch lokale Wärmeeinwirkung innerhalb des Bauraums, beispielsweise mittels eines Laserstrahls, mit dem herzustellenden Objekt verbunden werden.

Es kann aber auch beispielsweise ein pastöses oder flüssiges Material durch Aktivierung oder Aushärtung mit UV-Licht innerhalb des Bauraums unterstützt durch die Temperatur im Bauraum am herzustellenden Objekt aushärten.

Die thermische Isolierung des Bauraums umfasst eine mindestens zweiteilige, mit dem Druckkopf bewegbare Abdeckung. Mindestens ein erster Teil dieser Abdeckung ist fest an die Bewegung des Druckkopfes entlang der beiden Achsen gekoppelt. Mindestens ein zweiter Teil dieser Abdeckung ist mit mindestens einem lösbaren Kopplungsmittel an den ersten Teil ankoppelbar.

Es wurde erkannt, dass auf diese Weise die Serienherstellung von Objekten mit dem 3D-Drucker deutlich vereinfacht werden kann. Eine automatisierte Serienherstellung macht es in der Regel erforderlich, ein fertiges Objekt in automatisierter Weise aus dem 3D-Drucker zu entnehmen, um sodann mit der Herstellung des nächsten Objekts beginnen zu können. Ein von einer thermischen Isolierung allseits umschlossener Bauraum ist hierfür hinderlich.

Indem nun der zweite Teil der Abdeckung von der Bewegung des Druckkopfes entkoppelbar ist, kann dieser zweite Teil beispielsweise auf einer hierfür vorgesehenen Parkposition abgelegt werden, und der erste Teil kann dann durch die Bewegung des Druckkopfes von dem zweiten Teil wegbewegt werden. Auf diese Weise lässt sich eine Öffnung im Bauraum schaffen, durch die das hergestellte Objekt entnommen werden kann. Anschließend kann der erste Teil der Abdeckung wieder auf den zweiten Teil der Abdeckung zubewegt und so der Bauraum wieder geschlossen werden.

Hierfür können ohnehin vorhandene Antriebsquellen des Druckkopfes verwendet werden. Dies ist konstruktiv und hardwaretechnisch mit einem geringeren Aufwand realisierbar als beispielsweise die Ausgestaltung einer Seitenwand des Bauraums als aufklappbare oder aufschiebbare Tür.

Die Möglichkeit, Serienfertigung mit 3D-Druck zu betreiben, erlaubt es wiederum, Serienbauteile, deren Formgebung mit subtraktiver Materialbearbeitung (wie etwa Drehen, Fräsen oder Bohren), durch Guss oder auch durch Kombination dieser Verfahren nicht realisierbar ist, mittels 3D-Druck herzustellen. Es wird also der Kreis der praktikabel in Serie fertigbaren Objekte um solche Objekte erweitert, die auf Grund ihrer Formgebung nur mittels 3D-Druck praktikabel herstellbar sind. Hierbei kann es sich insbesondere beispielsweise um Objekte handeln, deren Form gemäß einem Optimierungsalgorithmus oder gemäß einer analytischen Berechnung so gewählt wurde, dass sie eine bestimmte Funktion bestmöglich erfüllt. Bei Objekten hingegen, die wahlweise mit 3D-Druck oder mit herkömmlicher Materialbearbeitung hergestellt werden können, ist die herkömmliche Materialbearbeitung für die Serienfertigung meistens schneller. Erste Kleinserien für die Entwicklung und Erprobung können jedoch auch in diesem Fall sinnvollerweise mit 3D-Druck hergestellt werden. Für den Fall, dass nach der Erprobung noch Änderungen an der finalen Formgebung erforderlich sind, sind dann keine Rüstkosten für die herkömmliche Materialbearbeitung verloren.

In dem Zustand, in dem der erste Teil der Abdeckung an den zweiten Teil der Abdeckung gekoppelt ist, können die beiden Teile der Abdeckung insbesondere beispielsweise ineinander eingreifen, aneinander angrenzen oder sich nach Art eines Schiebeschutzes überlappen. Es kann auch beispielsweise eines dieser Teile mit einem weiteren Teil nach Art eines Schiebeschutzes überlappen.

Beispielsweise definieren der erste Teil der Abdeckung und der zweite Teil der Abdeckung in dem Zustand, in dem diese Teile aneinander gekoppelt sind, eine Durchführung in den Bauraum. Der Druckkopf ist durch diese Durchführung in den Bauraum führbar. Insbesondere kann sich dann beispielsweise eine Heizung des Druckkopfes innerhalb des Bauraums befinden. Die vom Druckkopf erzeugte Wärme kann dann größtenteils im Bauraum zurückgehalten werden.

In einer besonders vorteilhaften Ausgestaltung umfasst der 3D-Drucker weiterhin eine innerhalb des Bauraums angeordnete Grundplatte zur Aufnahme des herzustellenden Objekts. Diese Grundplatte ist mindestens entlang einer Achse bewegbar, welche linear unabhängig ist von den Achsen, entlang derer der Druckkopf bewegbar ist. Die Grundplatte kann insbesondere beispielsweise senkrecht zu den Achsen, entlang derer der Druckkopf bewegbar ist, bewegbar sein.

Erfindungsgemäß umfasst der 3D-Drucker eine Fördereinrichtung, die in einem Zustand, in dem der erste Teil der Abdeckung von dem zweiten Teil der Abdeckung beabstandet ist, das hergestellte Objekt, und/oder die Grundplatte, aus dem Bauraum zu entnehmen vermag. Der 3D-Drucker kann dann ein Objekt nach dem anderen herstellen, ohne dass ein manueller Eingriff erforderlich ist. Die Fördereinrichtung kann beispielsweise als Greifvorrichtung oder als ein Roboterarm ausgebildet sein.

Hierbei ist es insbesondere vorteilhaft, nicht das Objekt selbst zu greifen, sondern die Grundplatte. Unabhängig davon, welches Objekt im Einzelnen hergestellt wird, kann die Grundplatte immer in der gleichen Weise gegriffen werden. Dies vereinfacht es, innerhalb der Serienfertigung von einem herzustellenden Objekt auf ein verändertes oder anderes Objekt zu wechseln.

Weiterhin ist es außerhalb des Bauraums einfacher möglich, ein an der Grundplatte haftendes hergestelltes Objekt maschinell von der Grundplatte zu trennen. Insbesondere besteht dann nicht die Gefahr, dass der 3D-Drucker oder seine Mechanik durch die zum Ablösen des Objekts von der Grundplatte nötige Krafteinwirkung Schaden nimmt. Weiterhin kann die Grundplatte außerhalb des Bauraums von Materialresten gereinigt werden, so dass die Herstellung weiterer Objekte dann wieder reproduzierbar von einer sauberen Grundplatte ausgehen kann.

In einer besonders vorteilhaften Ausgestaltung ist mindestens ein lösbares Kopplungsmittel eine Rastvorrichtung, die bei Annäherung des ersten Teils der Abdeckung an den zweiten Teil einrastet und bei schnellkräftiger Bewegung des ersten Teils ab einer vorgegebenen Mindestgeschwindigkeit ausrastet. Die Rastvorrichtung kann insbesondere so dimensioniert sein, dass sie bei Bewegungen des Druckkopfs mit den während des 3D-Drucks vorgesehenen Geschwindigkeiten eingerastet bleibt. Auf diese Weise wird es insbesondere erleichtert, den zweiten Teil der Abdeckung an einer vorgesehenen Parkposition abzulegen und den ersten Teil dann vom zweiten Teil wegzubewegen.

Ein Öffnen des Bauraums auf diese Weise kann weiterhin unterstützt werden durch eine Blockiervorrichtung, die den zweiten Teil der Abdeckung mindestens dann festzuhalten vermag, wenn sich dieser zweite Teil an einer vorgesehenen Parkposition befindet. Diese Blockiervorrichtung kann auch mit anderen lösbaren Kopplungsmitteln zusammenwirken. Unabhängig davon, wie das lösbare Kopplungsmittel im Einzelnen ausgestaltet ist, kann dann über den ersten Teil der Abdeckung eine Kraft auf das Kopplungsmittel ausgeübt werden, die zum Lösen ausreicht.

In einer weiteren besonders vorteilhaften Ausgestaltung ist mindestens ein lösbares Kopplungsmittel eine Rastverbindung, die bei Annäherung des ersten Teils der Abdeckung in den zweiten Teil einrastet. Es ist ein zusätzlicher Aktor vorgesehen, der die Rastverbindung auszurasten vermag. Auf diese Weise ist der Prozess des Ausrastens reproduzierbarer als mit einer Steuerung lediglich über die auf das Kopplungsmittel ausgeübte Kraft. Die für das "Auseinanderreißen" des Kopplungsmittels nötige Kraft kann beispielsweise durch Verkanten oder Verkleben variieren. Weiterhin kann die volle Dynamik der Antriebsquelle des Druckkopfes genutzt werden, um den Druckkopf möglichst schnell bewegen und das Objekt entsprechend schnell fertigstellen zu können.

Besonders vorteilhaft ist der Aktor nicht Teil der Abdeckung und vermag die Rastverbindung genau dann auszurasten, wenn sich der zweite Teil der Abdeckung an einer vorgesehenen Parkposition befindet. Dann verändert der Aktor bei Bewegungen des Druckkopfes seine Position nicht, so dass es konstruktiv einfacher wird, ihn mit Energie zu versorgen und anzusteuern.

Beispielsweise kann das Kopplungsmittel einen federbelasteten Hebel an einem Teil der Abdeckung sowie eine am anderen Teil der Abdeckung angebrachte Nut umfassen. Diese Nut kann insbesondere beispielsweise senkrechte Flanken haben, und von außerhalb der Nut kann eine schräge Rampe auf mindestens eine solche Flanke zuführen. Wenn die beiden Teile der Abdeckung aufeinander zubewegt werden, kann der Hebel auf der schrägen Rampe in Richtung auf die Nut gleiten. Wenn die beiden Teile der Abdeckung zueinander genau so angeordnet sind, dass die Abdeckung nominell geschlossen ist, wird der Hebel über die Nut bewegt und durch die Federkraft in die Nut gedrückt. Eine weitere Bewegung eines Teils der Abdeckung führt dann dazu, dass der Hebel die senkrechte Flanke der Nut mitnimmt oder umgekehrt, so dass der andere Teil der Abdeckung mitbewegt wird. Der Hebel kann dann durch den Aktor angehoben werden, um wieder eine freie Relativbewegung zwischen den beiden Teilen der Abdeckung zuzulassen.

In einer weiteren vorteilhaften Ausgestaltung umfasst mindestens ein lösbares Kopplungsmittel mindestens einen Permanentmagneten oder Elektromagneten an einem Teil der Abdeckung sowie mindestens ein ferromagnetisches Element an einem anderen Teil der Abdeckung. Auch ein permanentmagnetisches Kopplungsmittel lässt sich durch kräftige und/oder schnellkräftige Bewegung des ersten Teils der Abdeckung lösen und ist hierbei im Gegensatz zu einer Rastverbindung völlig verschleißfrei. Ein elektromagnetisches Kopplungsmittel lässt sich noch einfacher durch Abschalten des Elektromagneten lösen.

In einer weiteren besonders vorteilhaften Ausgestaltung umfasst mindestens ein lösbares Kopplungsmittel mindestens eine Erhebung an einem Teil der Abdeckung sowie mindestens eine zu dieser Erhebung korrespondierende Vertiefung an dem anderen Teil der Abdeckung. Die Erhebung ist durch Anheben oder Absenken mindestens eines Teils der Abdeckung aus dem Eingriff mit der Vertiefung bringbar. Auch ein solches Kopplungsmittel vereint eine sichere Kopplung einerseits mit einem verschleißfreien Lösevorgang andererseits.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
- Figur 1: Ausführungsbeispiel des 3D-Druckers 1 bei geschlossenem Bauraum 2;
- Figur 2: Zustand des in Figur 1 gezeigten 3D-Druckers 1 bei geöffnetem Bauraum 2;
- Figur 3: Ausführungsbeispiel eines lösbaren Kopplungsmittels 7a, 7b mit Hebel 12 und Aktor 11 zum Lösen;
- Figur 4: gelöster Zustand des in Figur 3 gezeigten Kopplungsmittels 7a, 7b.

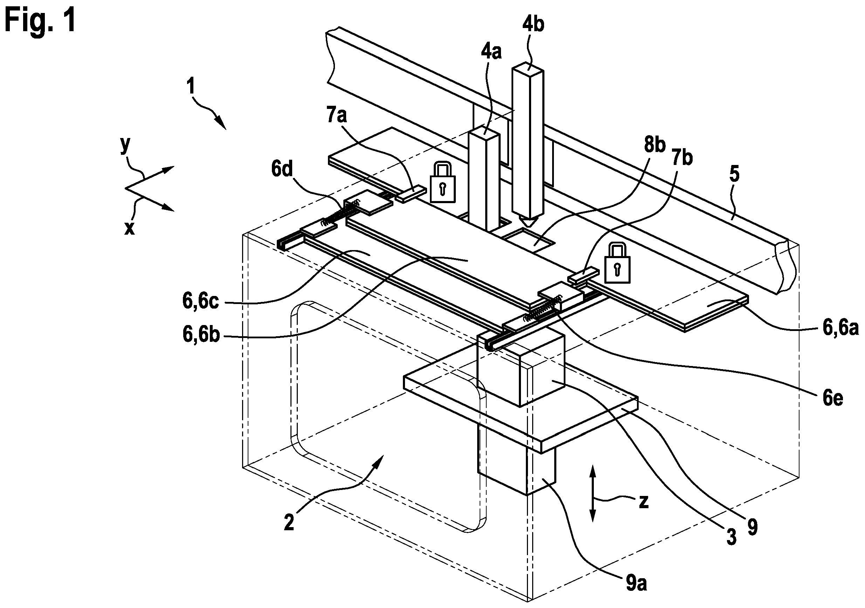

Figur 1 zeigt ein Ausführungsbeispiel eines 3D-Druckers 1. Das Objekt 3 ist auf einer Grundplatte 9 innerhalb eines thermisch isolierten Bauraums 2 herzustellen. Die Grundplatte 9 ist durch einen Antrieb 9a in Richtung der z-Achse verschiebbar. Mit zwei Druckköpfen 4a und 4b, die über ein Antriebssystem 5 senkrecht zur z-Achse entlang der x-Achse und der y-Achse bewegbar sind, kann dem herzustellenden Objekt 3 lokal Material hinzugefügt werden.

Der Bauraum 2 ist nach oben von einer Abdeckung 6 verschlossen. Diese Abdeckung 6 besteht aus drei Teilen 6a, 6b und 6c. Der erste Teil 6a und der zweite Teil 6b liegen aneinander an und bilden zwei Aussparungen. In dem in Figur 1 gezeigten Zustand ist durch die eine Aussparung der Druckkopf 4a, der gerade verwendet wird, in den Bauraum 2 geführt. Die andere Aussparung ist durch eine Isolationsklappe 8b verschlossen, da der Druckkopf 4b gerade nicht verwendet wird. Der zweite Teil 6b der Abdeckung 6 schiebt sich nach Art eines Schiebeschutzes über den dritten Teil 6c, wenn der Druckkopf 4a, 4b und der erste Teil 6a der Abdeckung 6 auf den dritten Teil 6c zubewegt werden. Wenn der Druckkopf 4a, 4b und der erste Teil 6a der Abdeckung 6 vom dritten Teil 6c wegbewegt werden, schiebt sich der zweite Teil 6b unterstützt durch Federelemente 6d, 6e in der entgegengesetzten Richtung über den dritten Teil 6c, um dem ersten Teil 6a zu folgen.

Der erste Teil 6a und der zweite Teil 6b der Abdeckung 6 sind in dem in Figur 1 gezeigten Zustand über lösbare Kopplungsmittel 7a, 7b miteinander gekoppelt.

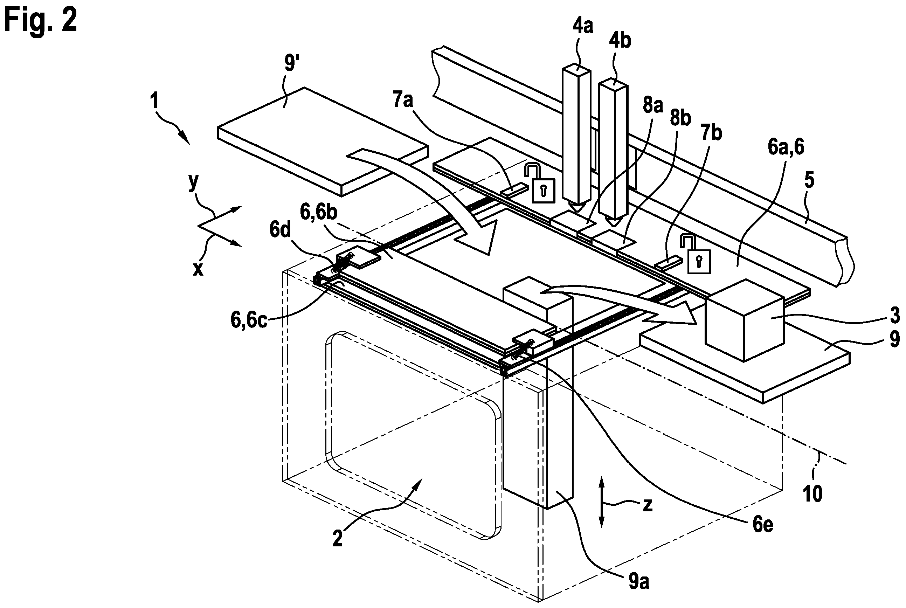

Figur 2 zeigt den Zustand des 3D-Druckers 1, in dem der Bauraum 2 geöffnet ist. Zu diesem Zweck wurde der zweite Teil 6b der Abdeckung 6 maximal über den dritten Teil 6c gefahren bis hin zu einer Parkposition 10, an der der zweite Teil 6b durch eine in Figur 2 nicht eingezeichnete Blockiervorrichtung festgehalten wird. Anschließend wurden die lösbaren Kopplungsmittel 7a, 7b gelöst, und der erste Teil 6a der Abdeckung 6 wurde bis an seinen Anschlag in positiver y-Richtung gefahren, um einen möglichst großen Spalt zum zweiten Teil 6b zu erzeugen.

In diesem Zustand sind auch beide Druckköpfe 4a und 4b aus dem Bauraum 2 herausgefahren. Daher ist nun auch die Aussparung, durch die in Figur 1 der Druckkopf 4a in den Bauraum 2 geführt war, durch eine Isolationsklappe 8a verschlossen.

Weiterhin wurde der Antrieb 9a der Grundplatte 9 maximal in z-Richtung nach oben gefahren. In dieser Position kann die Grundplatte 9 mitsamt dem darauf hergestellten Objekt 3 entnommen und durch eine neue Grundplatte 9' ersetzt werden. Danach kann direkt mit der Herstellung des nächsten Objekts 3 auf dieser neuen Grundplatte 9' begonnen werden, während das zuvor hergestellte Objekt 3 von der Grundplatte 9 entfernt und die Grundplatte 9 gereinigt wird.

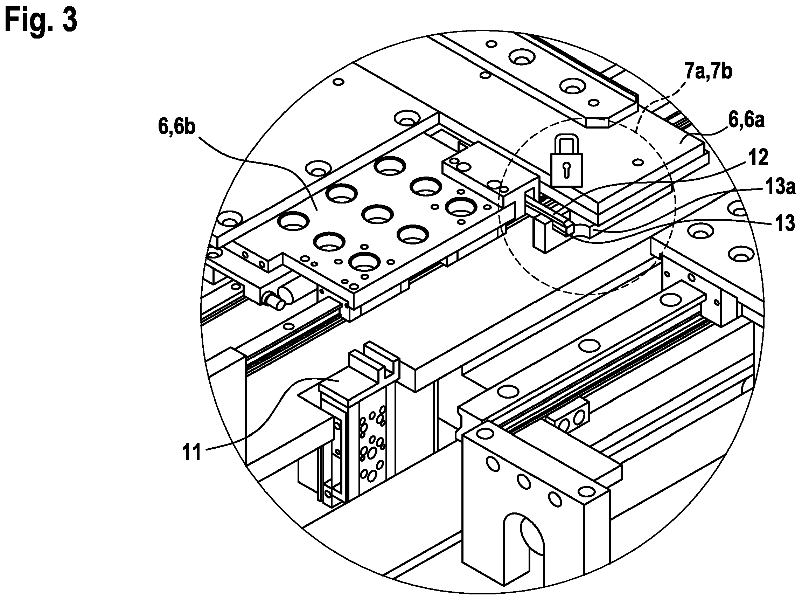

Figur 3 zeigt ein Ausführungsbeispiel eines lösbaren Kopplungsmittels 7a, 7b im gekoppelten Zustand. Das Kopplungsmittel 7a, 7b umfasst einen federbelasteten Hebel 12 am zweiten Teil 6b der Abdeckung 6 und eine Gabel 13a mit einer Nut 13 am ersten Teil 6a der Abdeckung 6. In dem in Figur 3 gezeigten Zustand greift der Hebel 12 in die Nut 13 ein. Wenn also der erste Teil 6a der Abdeckung 6 bewegt wird, nimmt er vermittelt durch die Gabel 13a und den Hebel 12 den zweiten Teil 6a mit. Zum Lösen des Kopplungsmittels 7a, 7b ist ein separater Aktor 11 vorgesehen, der weder eine Bewegung des ersten Teils 6a noch eine Bewegung des zweiten Teils 6b der Abdeckung 6 mitmacht.

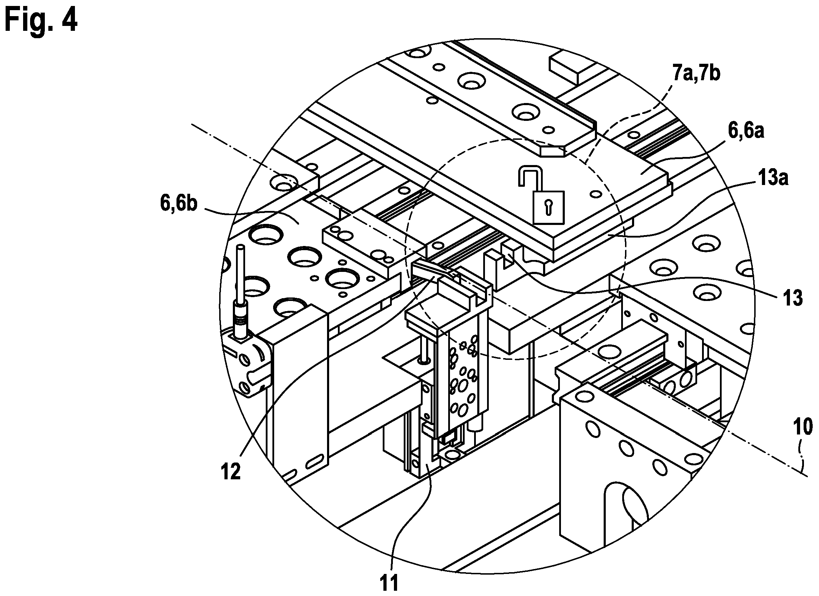

Figur 4 zeigt das in Figur 3 gezeigte Ausführungsbeispiel des Kopplungsmittels 7a, 7b im gelösten Zustand. In dem in Figur 4 gezeigten Zustand befindet sich der zweite Teil 6b der Abdeckung 6 an der Parkposition 10. Der Aktor 11 ist im Vergleich zu Figur 3 nach oben ausgefahren und hat den Hebel 12 angehoben. Dadurch ist der Hebel 12 aus dem Eingriff mit der Nut 13 herausbewegt worden. Dies wiederum machte es möglich, den ersten Teil 6a der Abdeckung 6 vom zweiten Teil 6b wegzubewegen, während der zweite Teil 6b an der Parkposition 10 verblieb. Wie in Figur 4 angedeutet, kann der Aktor 11 hierbei auch gleichzeitig als Blockiervorrichtung dienen, die den zweiten Teil 6b der Abdeckung 6 an der Parkposition 10 hält.

## Patentansprüche

1. 3D-Drucker (1), umfassend einen temperierbaren, thermisch isolierten Bauraum (2) für ein herzustellendes Objekt (3) sowie mindestens einen entlang mindestens zweier Achsen (x, y) bewegbaren Druckkopf (4a, 4b), der ein pulverförmiges, pastöses oder flüssiges Material lokal zu dem herzustellenden Objekt (3) hinzuzufügen vermag, wobei die thermische Isolierung des Bauraums (2) eine mindestens zweiteilige, mit dem Druckkopf (4a, 4b) bewegbare Abdeckung (6, 6a-6c) umfasst, wobei mindestens ein erster Teil (6a) dieser Abdeckung (6) fest an die Bewegung des Druckkopfes entlang der beiden Achsen (x, y) gekoppelt ist und wobei mindestens ein zweiter Teil (6b) dieser Abdeckung (6) mit mindestens einem lösbaren Kopplungsmittel (7a, 7b) an den ersten Teil (6a) ankoppelbar ist,
wobei die Abdeckung (6, 6a-6c) in einem Zustand, in dem der erste Teil der Abdeckung von dem zweiten Teil der Abdeckung beabstandet ist, eine Öffnung des Bauraums (2) ausbildet, durch die eine Fördereinrichtung, das hergestellte Objekt (3), und/oder eine Grundplatte (9), aus dem Bauraum (2) zu entnehmen vermag.

2. 3D-Drucker (1) nach Anspruch 1, wobei die innerhalb des Bauraums (2) angeordnete Grundplatte (9) zur Aufnahme des herzustellenden Objekts (3), die mindestens entlang einer Achse (z) bewegbar ist, wobei diese Achse (z) linear unabhängig ist von den Achsen (x, y), entlang derer der Druckkopf (4a, 4b) bewegbar ist.

3. 3D-Drucker (1) nach einem der vorherigen Ansprüche, wobei mindestens ein lösbares Kopplungsmittel (7a, 7b) eine Rastverbindung ist, die bei Annäherung des ersten Teils (6a) der Abdeckung (6) an den zweiten Teil (6b) einrastet und bei schnellkräftiger Bewegung des ersten Teils (6a) ab einer vorgegebenen Mindestgeschwindigkeit ausrastet.

4. 3D-Drucker (1) nach einem der vorherigen Ansprüche, weiterhin umfassend eine Blockiervorrichtung, die den zweiten Teil (6b) der Abdeckung (6) mindestens dann festzuhalten vermag, wenn sich dieser zweite Teil (6b) an einer vorgesehenen Parkposition (10) befindet.

5. 3D-Drucker (1) nach einem der vorherigen Ansprüche, wobei mindestens ein lösbares Kopplungsmittel (7a, 7b) eine Rastverbindung ist, die bei Annäherung des ersten Teils (6a) der Abdeckung (6) an den zweiten Teil (6b) einrastet, wobei ein zusätzlicher Aktor (11) vorgesehen ist, der die Rastverbindung auszurasten vermag.

6. 3D-Drucker (1) nach Anspruch 5, wobei der Aktor (11) nicht Teil der Abdeckung (6) ist und die Rastverbindung genau dann auszurasten vermag, wenn sich der zweite Teil (6b) der Abdeckung (6) an einer vorgesehenen Parkposition befindet.

7. 3D-Drucker (1) nach Anspruch 6, wobei das Kopplungsmittel (7a, 7b) einen federbelasteten Hebel (12) an einem Teil (6a, 6b) der Abdeckung (6) und eine am anderen Teil (6a, 6b) der Abdeckung (6) angebrachte Nut (13) umfassen dergestalt, dass der Hebel (12) bei einer Relativbewegung der Teile (6a, 6b) zueinander über die Nut (13) bewegt werden und durch die Federkraft in die Nut (13) gedrückt werden kann.

8. 3D-Drucker (1) nach einem der vorherigen Ansprüche, wobei mindestens ein lösbares Kopplungsmittel (7a, 7b) mindestens einen Permanentmagneten oder Elektromagneten an einem Teil (6a, 6b) der Abdeckung (6) sowie mindestens ein ferromagnetisches Element an einem anderen Teil (6a, 6b) der Abdeckung (6) umfasst.

9. 3D-Drucker (1) nach einem der vorherigen Ansprüche, wobei mindestens ein lösbares Kopplungsmittel (7a, 7b) mindestens eine Erhebung an einem Teil (6a, 6b) der Abdeckung (6) sowie mindestens eine zu dieser Erhebung korrespondierende Vertiefung an dem anderen Teil (6a, 6b) der Abdeckung (6) umfasst und wobei die Erhebung durch Anheben oder Absenken mindestens eines Teils (6a, 6b) der Abdeckung (6) aus dem Eingriff mit der Vertiefung bringbar ist.

## Claims

1. 3D printer (1) comprising a temperature-controllable, thermally insulated installation space (2) for an object (3) to be produced and at least one print head (4a, 4b) which is movable along at least two axes (x, y) and which is able to add a powdery, pasty or liquid material locally to the object (3) to be produced, wherein the thermal insulation of the installation space (2) comprises an at least two-part cover (6, 6a-6c) that is movable with the print head (4a, 4b), wherein at least a first part (6a) of said cover (6) is coupled fixedly to the movement of the print head along the two axes (x, y), and wherein at least a second part (6b) of said cover (6) is couplable to the first part (6a) by way of at least one releasable coupling means (7a, 7b), wherein, in a state in which the first part of the cover is spaced apart from the second part of the cover, the cover (6, 6a-6c) forms an opening of the installation space (2) through which opening a conveying device, the object (3) produced and/or a base plate (9) are able to be removed from the installation space (2).

2. 3D printer (1) according to Claim 1, wherein the base plate (9), arranged within the installation space (2), for receiving the object (3) to be produced, which base plate is movable at least along an axis (z), wherein said axis (z) is linearly independent of the axes (x, y) along which the print head (4a, 4b) is movable.

3. 3D printer (1) according to either of the preceding claims, wherein at least one releasable coupling means (7a, 7b) is a latching connection which engages when the first part (6a) of the cover (6) approaches the second part (6b) and which disengages under fast and powerful movement of the first part (6a) from a predefined minimum speed.

4. 3D printer (1) according to one of the preceding claims, further comprising a blocking device which is able to hold the second part (6b) of the cover (6) at least when said second part (6b) is at an intended parking position (10).

5. 3D printer (1) according to one of the preceding claims, wherein at least one releasable coupling means (7a, 7b) is a latching connection which engages when the first part (6a) of the cover (6) approaches the second part (6b), wherein an additional actuator (11) that is able to disengage the latching connection is provided.

6. 3D printer (1) according to Claim 5, wherein the actuator (11) is not part of the cover (6) and is able to disengage the latching connection precisely when the second part (6b) of the cover (6) is at a intended parking position.

7. 3D printer (1) according to Claim 6, wherein the coupling means (7a, 7b) comprises a spring-loaded lever (12) on one part (6a, 6b) of the cover (6) and a groove (13) provided on the other part (6a, 6b) of the cover (6), in such a way that the lever (12), during a relative movement of the parts (6a, 6b) with respect to one another, can be moved via the groove (13) and can be pressed into the groove (13) by way of the spring force.

8. 3D printer (1) according to one of the preceding claims, wherein at least one releasable coupling means (7a, 7b) comprises at least one permanent magnet or electromagnet on one part (6a, 6b) of the cover (6) and at least one ferromagnetic element on another part (6a, 6b) of the cover (6).

9. 3D printer (1) according to one of the preceding claims, wherein at least one releasable coupling means (7a, 7b) comprises at least one elevation on one part (6a, 6b) of the cover (6) and at least one depression, corresponding to said elevation, on the other part (6a, 6b) of the cover (6), and wherein the elevation is able to be brought out of engagement with the depression by way of raising or lowering of at least one part (6a, 6b) of the cover (6).

## Revendications

1. Imprimante 3D (1), comprenant un espace de construction (2), isolé thermiquement et dont la température peut être contrôlée, pour un objet à fabriquer (3) ainsi qu'au moins une tête d'impression (4a, 4b) pouvant se déplacer le long d'au moins deux axes (x, y), laquelle est apte à ajouter localement un matériau pulvérulent, pâteux ou liquide à l'objet à fabriquer (3), l'isolation thermique de l'espace de construction (2) comprenant un capot (6, 6a-6c) au moins en deux parties, pouvant se déplacer avec la tête d'impression (4a, 4b), au moins une première partie (6a) de ce capot (6) étant accouplée à demeure au déplacement de la tête d'impression le long des deux axes (x, y) et au moins une deuxième partie (6b) de ce capot (6) pouvant être accouplée à la première partie (6a) par au moins un moyen d'accouplement (7a, 7b) détachable, le capot (6, 6a-6c) formant, dans un état dans lequel la première partie du capot est écartée de la deuxième partie du capot, une ouverture de l'espace de construction (2) à travers laquelle une installation de transport est apte à retirer l'objet fabriqué (3) et/ou une plaque de base (9) hors de l'espace de construction (2).

2. Imprimante 3D (1) selon la revendication 1, la plaque de base (9) disposée à l'intérieur de l'espace de construction (2) destinée à recevoir l'objet à fabriquer (3), qui peut se déplacer au moins le long d'un axe (z), cet axe (z) étant linéairement indépendant des axes (x, y) le long desquels peut se déplacer la tête d'impression (4a, 4b).

3. Imprimante 3D (1) selon l'une des revendications précédentes, au moins un moyen d'accouplement (7a, 7b) détachable étant une liaison par encliquetage, qui s'encliquète lorsque la première partie (6a) du capot (6) s'approche de la deuxième partie (6b) et se désencliquète lors d'un déplacement puissant rapide de la première partie (6a) à partir d'une vitesse minimale prédéfinie.

4. Imprimante 3D (1) selon l'une des revendications précédentes, comprenant en outre un dispositif de blocage qui est en mesure de maintenir la deuxième partie (6b) du capot (6) au moins lorsque cette deuxième partie (6b) se trouve à une position de stationnement (10) prévue.

5. Imprimante 3D (1) selon l'une des revendications précédentes, au moins un moyen d'accouplement (7a, 7b) détachable étant une liaison par encliquetage, qui s'encliquète lorsque la première partie (6a) du capot (6) s'approche de la deuxième partie (6b), un actionneur (11) supplémentaire étant prévu, qui est apte à désencliqueter la liaison par encliquetage.

6. Imprimante 3D (1) selon la revendication 5, l'actionneur (11) ne faisant pas partie du capot (6) et la liaison par encliquetage étant apte à se désencliqueter précisément lorsque la deuxième partie (6b) du capot (6) se trouve à une position de stationnement prévue.

7. Imprimante 3D (1) selon la revendication 6, le moyen d'accouplement (7a, 7b) comprenant un levier à ressort (12) sur une partie (6a, 6b) du capot (6) et une rainure (13) ménagée sur l'autre partie (6a, 6b) du capot (6), de telle sorte que le levier (12) peut être déplacé par l'intermédiaire de la rainure (13) lors d'un mouvement relatif des parties (6a, 6b) l'une par rapport à l'autre et être pressé dans la rainure (13) par la force du ressort.

8. Imprimante 3D (1) selon l'une des revendications précédentes, au moins un moyen d'accouplement (7a, 7b) détachable comprenant au moins un aimant permanent ou un électroaimant sur une partie (6a, 6b) du capot (6) et au moins un élément ferromagnétique sur une autre partie (6a, 6b) du capot (6).

9. Imprimante 3D (1) selon l'une des revendications précédentes, au moins un moyen d'accouplement (7a, 7b) amovible comprenant au moins une élévation sur une partie (6a, 6b) du capot (6) et au moins un évidement correspondant à cette élévation sur l'autre partie (6a, 6b) du capot (6) et l'élévation pouvant être dégagé de la prise avec l'évidement par levage ou abaissement d'au moins une partie (6a, 6b) du capot (6).
